# EUROPEAN PATENT APPLICATION

(11) **EP 0 780 874 A2**
(43) Date of publication of application: **25.06.1997**
(21) Application number: 96309297.8
(22) Date of filing: 19.12.1996
(51) Int. Cl.: H01J 17/20, H01J 17/48, G02F 1/133

(54) **Addressing structure using ionizable gaseous mixtures having multiple ionizable components**

(30) Priority: 21.12.1995 US 576382
(71) Applicant: TEKTRONIX, INC., Wilsonville, Oregon 97070-1000 (US)
(72) Inventor: Ilcisin, Kevin J., Beaverton, Oregon 97007 (US); Martin, Paul C., Vancouver, Washington 98685 (US); Buzak, Thomas S., Beaverton, Oregon 97007 (US)
(74) Representative: Burke, Steven David

(57) **Abstract**

An addressing structure and method uses an ionizable gaseous mixture including at least two ionizable components that provide the gaseous mixture with a decreased decay time to address data storage elements (16) defined by the overlapping areas of multiple column electrodes (18) on a first substrate (48) and multiple channels (20) on a second substrate (54). Each of the channels contains the ionizable gaseous mixture and includes a reference potential electrode that receives a data signal and a row electrode that receives a data strobe signal. The ionizable gaseous mixture contains first and second ionizable components having particles which are ionizable at a predetermined voltage that does not cause uncontrolled breakdown between the conductors that produce the interruptible electrical connection. The particles of the first ionizable component of the gaseous mixture are characterized by their returning from the ionized state to the nonionized state without undergoing a metastable state of greater duration than a transient metastable state. The particles of the second ionizable component are characterized by undergoing a metastable state when returning from the ionized state to the nonionized state. A sufficient quantity of the particles of the first ionizable component is present in the gaseous mixture to reduce the occurrences of secondary ionization-producing collisions between ionized particles and electrons when the gaseous medium returns from the ionized state to the nonionized state, thereby decreasing the time required to return the ionizable gaseous medium from the ionized state to the nonionized state. The decreased decay time of the ionizable gaseous mixture provides an addressing structure having high-speed addressing capabilities.

## Description

### Technical Field

The present invention relates to systems constructed of data storage elements and, in particular, to apparatus for and methods of addressing an array of such storage elements with the use of an ionizable gaseous mixture having a decreased decay time.

### Background of the Invention

Systems employing data storage elements include, for example, video cameras and image displays. Such systems employ an addressing structure that provides data to or retrieves data from the storage elements. One system of this type to which one embodiment of the present invention is particularly directed is a general purpose flat panel display, whose storage or display elements store light pattern data.

A flat panel display comprises multiple display elements distributed throughout the viewing area of a display surface. A flat panel display system is desirable because it does not necessarily require a cathode-ray tube to develop a display image. A cathode-ray tube is undesirable because of its size, fragility, and need for high voltage drive circuitry.

One type of flat panel display system employs an addressing structure that accomplishes direct multiplexing of multiple liquid crystal cells or display elements arranged in an array. Each of the liquid crystal cells is positioned between a pair of electrical conductors that selectively apply select and deselect voltage signals across the liquid crystal cell to change its optical properties and thereby change the brightness of the image it develops. The select and deselect voltage signals are applied to the liquid crystal display by use of an ionizable gas contained within an enclosed volume, the gas functioning as an electrical switch that changes between a conducting state when it is ionized and a nonconducting state when it is nonionized.

The addressability of the liquid crystal display panel, *i.e.*, the number of horizontal lines that can be addressed in a single frame time, is determined by the sum of the data setup time, the data capture time, and the ionizable gas decay time. The decay time, defined as the time the ionizable gas takes to change from the ionized conductive state to the nonionized nonconductive state, should generally be less than half the horizontal line address period to allow for cross-talk compensation. At a minimum, the decay time should be less than one horizontal line address time. For a 60 Hz frame rate, this implies an ionizable gas decay time of approximately 8-32 microseconds.

Flat panel display systems, such as those disclosed in U.S. Patent No. 4,895,149 to Buzak et al., and U.S. Patent No. 5,077,553 to Buzak, both assigned to the assignee of the present application, use helium as the ionizable gas because of its well known beneficial properties. Specifically, pure helium decays in approximately 16-24 microseconds, depending on various physical parameters such as temperature and pressure.

In these prior art flat panel display systems, pure helium gas is ionized to the conductive state, *i.e.*, becomes a mixture of charged and neutral particles, to form the electrical switch by receiving energy, in the form of electrons, from an electrode operatively associated with the helium gas. The electrons provided when the electrode is energized excites and thereby induces ionization of the helium gas particles.

After ground potential is applied to the electrode, ionized gas particles return from the ionized state to the nonionized state by recombination of helium ions with electrons or by collisions of the helium ions with the wall of the enclosed volume. As the ions and electrons recombine, the helium particles can form excited neutral helium particles that can further decay to form excited metastable helium particles and helium particles in the ground state. The excited metastable helium particles do not decay radiatively through dipole transitions but instead decay by collisions either with one another to produce helium ion-electron pairs and neutral helium atoms in the ground state, with the wall of the display panel or by higher order multi-pole transitions. Production of these helium ion-electron pairs results in a secondary ionization, which keeps the gas conductive, thereby lengthening the decay time. The ionized gas decay time represents the time during which the ionized gas returns to a nonionized state upon the removal of an electrode.

The decay time of the helium gas is, therefore, thought to be primarily controlled by the time-dependent density of these excited metastable helium particles in the secondary ionization, or afterglow, of the initial ionization process.

This decay time is sufficient for applications such as NTSC television and VGA resolution computer monitors. The decay time of pure helium is, however, insufficient for applications requiring faster addressability times such as high definition television (HDTV) and computer workstation monitors, which address 1024 lines in 16 milliseconds.

Several procedures for reducing the decay time of pure helium gas have been employed in the prior art. In one method, shortening the decay time is effected by increasing the diffusion rate and thereby accelerating the collision rate of the metastable particles. However, increasing the diffusion rate entails significantly elevating the operating temperature of the liquid crystal display and thereby destroys the operability of the display panel. Therefore, this technique is not a feasible alternative.

Another known method for reducing the decay time of metastable helium particles entails adding a noble gas, such as xenon or neon, to the enclosed volume of helium gas forming the electrical switch of the panel display system in combinations known as Penning or Quenching mixtures. Addition of the noble gas decreases the density of the helium particles that form in the metastable state and thereby reduces the overall decay time of the ionizable gas mixture because it contains fewer metastable particles that must decay than does a pure helium ionized gas having the same number of particles.

The method of adding a noble gas to compose such Penning or Quenching mixtures to the ionizable gas suffers from numerous disadvantages. First, decreasing the density of the ionizable gas in the enclosed volume may decrease the efficacy of the ionizable gas to act as an electrical switch.

Second, all noble gases have their own metastable states. Collisions between two metastable particles of the added noble gas may also result in the formation of an ion-electron pair. Thus, the secondary ionization in the channel continues.

Third, addition of a noble gas does not significantly reduce the number of collisions between helium metastable particles that form ion-electron pairs resulting in secondary ionization.

A fourth disadvantage associated with such Penning or Quenching mixtures is the reduced life of the cathode due to the "sputtering" of electrode material thereon. The mechanisms underlying the increased sputtering (when bombarded by gas ions are primarily twofold. First, the addition of even trace amounts of the heavier noble gas atoms such as xenon and neon dramatically increase the sputtering rate. This is due to the phenomenon wherein the majority of ions striking the cathode are of a trace gas, which are xenon or neon in a Penning or Quenching mixture, as the ionized gas mixture evolves to a State of minimum potential energy. Second, heavier noble gas atoms, such as xenon and neon, sputter in a "linear cascade regime" which produces greater erosion of the display panel surface than the "single knock-on regime" sputtering of lighter helium atoms. The resulting erosion caused by this "linear cascade regime" sputtering of the heavier noble gases shortens the life of the display panel significantly.

A fifth disadvantage is due to the burying, after striking the cathode, of the xenon or neon ions causing sputtering in the electrode. Since ions which cause sputtering are buried, the trace components, rather than background helium, are consumed. The loss of the trace particles returns the system to one of pure helium and the corresponding long decay times.

A system has been developed which addresses some such disadvantages of pure helium, and Quenching or Penning mixtures, wherein an ionizable gaseous medium includes a collisionally matched particle component, such as singly ionized carbon particles, is disclosed in U.S. Patent Application No. 08/424,697, entitled Addressing Structure Using Ionizable Gaseous Mixture Having Decreased Decay Time, which is assigned to the assignee of this patent application. The collisionally matched particles described in this pending application reduce the decay time of an ionizable gaseous mixture by preventing the formation of ion-electron pairs resulting in secondary ionization.

Despite some reduction in decay time with addition of collisionally matched particles, the decay rates of such known ionizable gaseous mixtures nonetheless have failed to keep pace with addressability times required by high definition applications such as HDTV, XGA, and workstation computer monitors. Furthermore, precise volumetric proportions of component gases must be maintained in an environment where trace components are quickly consumed in order to operate satisfactorily. Consequently, the mixture lacks stability.

There persists a need, therefore, to accelerate the decay time of gaseous mixtures for addressing display structures, and for a more stable gaseous mixture having enlarged ranges or tolerances for variations in concentrations of the respective components thereof.

### Summary of the Invention

Addressing those and other problems in the prior art, the present invention relates to an apparatus and method for decreasing the decay time, *i.e.*, the time required to return an ionizable gaseous medium from an ionized state to a nonionized state, in a system for addressing analog data storage elements that stores a data signal. In this addressing system, an ionizing means selectively causes the ionizable gaseous medium to assume the ionized state and thereby provide electrons and ions to complete the electrical connection between the data element and the electrical reference to selectively address the data elements. The ionizing means also selectively allows the ionizable gaseous medium to return from the ionized state to the nonionized state. The data element and electrical reference are operatively associated with spaced apart electrical conductors together with the ionizable gaseous medium. Thus, in its ionized form, the ionizable gaseous mixture contains free electrons and ions which function as an electrical switch for addressing the data elements providing an electrical connection when in an energized state.

As used herein, ionized state refers to a conductive state of the ionizable gaseous mixture wherein it assumes at least a threshold conductivity to form the interruptible electrical switch by receiving energy in the form of electrons provided when spaced apart electrical conductors operatively associated with the ionizable gaseous medium are energized. The ionizable gaseous mixture switches from the conductive, *i.e.*, ionized, state to the nonconductive, *i.e.*, nonionized, state by an accelerated decay process resulting from the recombining or collisionally decaying to neutral particles of the components of the ionizable gaseous mixture, such that the total conductivity is brought below a threshold conductivity that is "nonionized." As used herein, a nonionized state refers to assuming of a nonconductive state by the ionizable gaseous mixture that prevents a change of the stored analog voltage of less than ten percent of the total.

According to the present invention, the gaseous medium is provided as a gaseous mixture including first and second ionizable components having particles which are ionizable at a predetermined voltage that does not cause uncontrolled or other breakdown such as formation of an arc. As used herein, uncontrolled breakdown refers to current density in the conductors and/or the interruptible electrical connection that cannot be controlled by external electronics.

The particles of the first ionizable component are characterized by their returning from the ionized state to the nonionized state without undergoing a metastable state of greater than a transient duration. As used herein, a metastable state that is transient refers to a metastable lifetime undergone by particles of the first ionizable component that is less than one-half of the lifetime of the metastable state of particles of the second ionizable component, including a lack of a metastable state, when returning from the ionized state to the nonionized state.

The particles of the second ionizable component undergo a characteristic metastable state of greater than a transient duration. As used herein, such a metastable state refers to a characteristic neutral, excited state wherein dipole transitions are not undergone to assume a ground state when returning from the ionized state to the nonionized state. Metastable particles instead typically decay through collisions which form ion-electron pairs resulting in secondary ionizations which increase decay time.

The present invention further provides that in the gaseous mixture, the particles of the first ionizable component are present in sufficient quantity to reduce occurrences of secondary ionization-producing collisions between excited metastable particles when the ionizable gaseous medium returns from the ionized to the nonionized state. The time required to return the ionizable gaseous medium from the ionized state to the nonionized state is thereby reduced. This gaseous mixture is described in more particular detail below, after the description of the overall addressing structure that immediately follows.

The invention is further described herein by way of example with reference to two embodiments.

The first embodiment comprises an addressing structure implemented in a high resolution flat panel display system that can be used in either direct view or projection applications. The display system includes a display panel having a display surface formed of an array of data storage or display elements distributed throughout the viewing area. Each of the display elements comprises a localized volume of an ionizable gaseous mixture having a decreased decay time, such as a mixture of helium and nitrogen or hydrogen, and an electro-optic material, such as a nematic liquid crystal, that cooperate to modulate externally generated light propagating through the region of the electro-optic material where the display element is located.

The second embodiment comprises an addressing structure implemented as part of a memory device into which and out of which analog information can be, respectively, electronically written or electronically read. The memory device includes an array of data storage or memory elements each of which includes a localized volume of ionizable gaseous mixture having an accelerated decay time, such as helium and hydrogen or nitrogen, and a dielectric material, such as glass, plastic, or photoconductor. The ionizable gaseous mixture and dielectric material cooperate to provide a way of addressing the memory element to read out a signal previously developed across the memory element, irrespective of the manner in which it acquired the signal.

The storage elements are arranged in columns and rows for both embodiments. In the first embodiment, a row represents one line of video information or data, and in the second embodiment, a row represents a set of discrete quantities of analog information or data. (The information addressed in either embodiment is hereafter referred to as "data.") The columns receive the data, and a data strobe circuit addresses the columns row by row in a row scan fashion.

Either the display panel of the first embodiment or the memory device of the second embodiment comprises first and second spaced-apart substrates positioned face-to-face to each other. Multiple nonoverlapping electrical conductors extending generally in a first direction along the inner surface of the first substrate form column electrodes for data drive signals applied to them. Multiple nonoverlapping channels inscribed into the inner surface of the second substrate extend along the inner surface in a direction generally transverse to the first direction. The first and second directions preferably align with the vertical and horizontal directions, respectively. A reference potential electrode and a row electrode electrically isolated from each other extend along the length of the interior of each channel and receive data strobe signals applied between them. Each of the channels is filled with the ionizable gaseous mixture having an accelerated decay time.

In the display panel of the first embodiment, a layer of material having electro-optical properties and a layer of dielectric material are positioned between the inner surfaces of the first and second substrates, the layer of dielectric material covering the channels to form a barrier between the layer of the electro-optic material and the ionizable gas. The display elements are defined by the overlapping areas of the column electrodes and the channels and appear as spots on the display screen. The spots preferably are sufficiently small and positioned close to one another so that they are indistinguishable by an observer during normal viewing conditions.

The display panel is configured as described above so that for each display element, the ionizable gaseous mixture functions as an electrical switch that changes between a conducting or plasma state and a nonconducting or nonionized state in response to an applied data strobe signal. The magnitude of the data drive signal on the column electrodes corresponds to the luminance of a display image.

Whenever it is in the conducting state, a region of ionized gaseous mixture transmits a data voltage of a magnitude representing that of a data drive signal in a spatially aligned region of the liquid crystal material. In its nonconductive, nonionized state, the gaseous mixture allows the spatially aligned region of liquid crystal material to hold the data voltage across it for a period determined by the decay time of the liquid crystal material. The ionizable gaseous mixture functions, therefore, to select and store data across the liquid material and thereby provide a display system having gray scale and color capability.

Switching the ionizable gaseous mixture between the conducting state and the nonconducting state in the display panel modulates the light transmission through a display element. The modulation of light transmission depends on the magnitude of the applied data drive signal. A monochrome or black-and-white display system with gray scale luminance qualities can be implemented with the use of the display panel.

A full color display system with controllable color intensity can be implemented by positioning within the black-and-white display system a color filter containing groups of spots in three primary colors spatially aligned with the display elements. A group of three display elements spatially aligned with the group of spots would, therefore, represent one image pixel whose color is determined by the relative intensities of the spots in the group.

The display system of the present invention is capable of rendering fully dynamic, gray scale images over a broad range of field rates to provide a quality display. The display system is especially advantageous because it in of simple, rugged construction and is capable of addressing at least 3,000 lines of data at 60 Hz field rates on the display screen.

In the memory device of the second embodiment, only a layer of dielectric material is positioned between the first and second substrates. The memory elements are defined by the overlapping areas of the column electrodes and the channels. The memory device is configured as described above so that for each memory element, the ionizable gaseous mixture functions as an electrical switch that changes between the ionized conducting state and the nonionized nonconducting state in response to the applied data strobe signal.

Amplifiers providing the data drive signals are configured as column electrode drive amplifiers in a data write mode and as column electrode sensing amplifiers in a data read mode.

In the data read mode, the column electrode sensing amplifier associated with the region applies a reference voltage to a surface of the layer of dielectric material opposite the surface spatially aligned with the region of ionized gaseous mixture. A change in the voltage across the dielectric material as the gaseous mixture returns to a nonconductive state is proportional to the previously written data voltage and appears at the output of the column electrode sensing amplifier. This represents the data read mode of the memory device.

The decay of the gas particles from the ionized state to the nonionized state entails recombination of the ions with electrons in the gas, or collisions with walls of the enclosed volume or each other. The excited neutral helium or other suitable gas particles, referred to herein as the second ionizable component, that are formed during recombination can then decay to form excited helium metastable particles.

Properties of the additive gas particles imparting the accelerated decay time of the gaseous mixture to the helium or other suitable gas particles of the second ionizable component provided by the present invention, referred to herein as the first ionizable component, include their ready recombination and transitioning to their neutral ground states without transitioning to a metastable state which is more than transient. These additive gases thus decay radiatively to ground states at accelerated rates. Energy is thereby removed from the ionizable gaseous mixture with minimal formation of additional free charge and associated secondary ionization characteristic of undesirable metastable particles which collide to form ion-electron pairs and lengthen the decay time of the gaseous mixture.

The first ionizable component of the gaseous mixture preferably includes particles which are characterized by a threshold ionization potential of no greater than about 30 electron volts. The particles of the first ionizable component of the gaseous mixture may include nitrogen and preferably includes hydrogen.

The second ionizable component of the gaseous mixture according to the present invention preferably includes a noble gas having an ionization potential of greater than about 4 electron volts. The particles of the second ionizable component may include a noble gas having suitable ionization potentials. Such noble gases include helium, neon, xenon, krypton, and argon.

Dispensation of the particles of the first ionizable component from a reservoir in communication with the gaseous mixture to maintain desired concentrations of the first ionizable component may be provided through appropriate periodic heating to dispense the particles in the gaseous mixture to maintain the desired proportion. Alternatively, the particles of the first ionizable component may be dispensed through periodic opening of the reservoir to dispense an appropriate predetermined amount thereof. Alternatively, the particles may be provided by a reservoir that has an equilibrium vapor pressure of the first ionizable components with the second ionizable component.

The gaseous mixture of the present invention may further include a predetermined amount of collisionally matched ionized particles which undergo ion-atomic particle collisions with the collisionally matched ionized particles. The collisionally matched ionized particles may contain carbon, and are preferably carbon-containing compounds such as carbon monoxide, carbon dioxide, carbon tetrafluoride, methane, and carbon vapor vaporized from a carbon-containing surface.

A significant advantage is its sputtering only in the "single knock-on regime," rather than the "linear cascade regime" knocking of certain prior art reactive plasma gases such as Penning and Quenching mixtures, which substantially reduced the life of the display panel. The single knock regime sputtering thus preserves the life of the display panel.

A particularly advantageous feature of the present invention includes the broad acceptable range or tolerance limits for the proportion of the particles of the first ionizable component, in the gaseous mixture. The concentration of which may range between about 0.01 percent and about 20.0 percent of the gaseous mixture. This broad operative range for the components of the gaseous mixture provides a less sensitive, more stable medium.

Additional objects and advantages of the present invention will be apparent from the detailed description of preferred embodiments thereof, which proceeds with reference to the accompanying drawings.

### Brief Description of the Drawings

Fig. 1 is a diagram showing a frontal view of the display surface of a display panel and associated drive circuitry of a display system embodying the present invention.

Fig. 2 is an enlarged fragmentary isometric view showing the layers of structural components forming the display panel embodying the present invention as viewed from the left side in Fig. 1.

Fig. 3 is an enlarged fragmentary frontal view with portions broken away to show different depthwise views of the interior of the display panel of Fig. 2.

Fig. 4 is an enlarged sectional view taken along lines 4-4 of Fig. 3.

Fig. 5 is an enlarged sectional view taken along lines 5-5 of Fig. 3.

Fig. 6 is an equivalent circuit showing for a display system the operation of the ionizable gas as a switch for an exemplary row receiving data strobe pulse and three exemplar data columns receiving a data drive signal.

Fig. 7 is a diagram showing the various time constraints that determine the maximum number of lines of data that are addressable by a display system embodying the present invention.

Fig. 8 is an equivalent circuit showing the operation of the ionizable gas as an electrical switch in cooperation with the data drive circuit to form an addressing structure for selectively writing data into and reading data out of a memory element.

Figs. 9A-9C illustrate chemical reactions bringing the ionizable gaseous mixture from the nonconductive state to the conductive state, and the decay process of the ionizable gaseous mixture returning the gaseous mixture to the nonconductive state.

Fig. 10 shows a graph representing the decay times of Quenching or Penning mixture, pure helium gas and an ionizable gaseous mixture including helium gas and hydrogen.

### Detailed Description of Preferred Embodiments

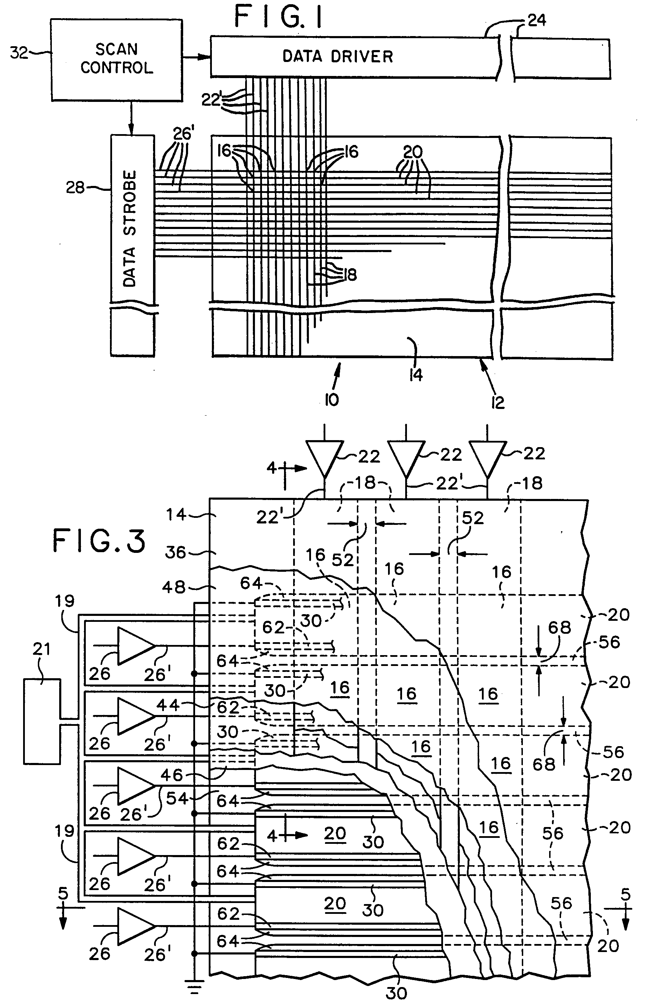

Fig. 1 shows a flat panel display system 10, which represents a first embodiment that implements the addressing structure and carries out the addressing method of the present invention. With reference to Fig. 1, flat panel display system 10 comprises a display panel 12 having a display surface 14 that contains a pattern formed by a rectangular planar array of nominally identical data storage or display elements 16 mutually spaced apart by predetermined distances in the vertical and horizontal directions. Each display element 16 in the array represents the overlapping portions of thin, narrow electrodes 18 arranged in vertical columns and elongate, narrow channels 20 arranged in horizontal rows. (The electrodes 18 are hereinafter referred to as "column electrodes 18.") The display elements 16 in each of the rows of channels 20 represent one line of data.

The widths of column electrodes 18 and channels 20 determine the dimensions of display elements 16, which are of rectangular shape. Column electrodes 18 are deposited on a major surface of a first electrically nonconductive, optically transparent substrate, and channels 20 are inscribed in a major surface of a second electrically nonconductive, optically transparent substrate, as will be further described below. Skilled persons will appreciate that certain systems, such as a reflective display of either the direct view or projection type, would require that only one of the electrically nonconductive substrates be optically transparent.

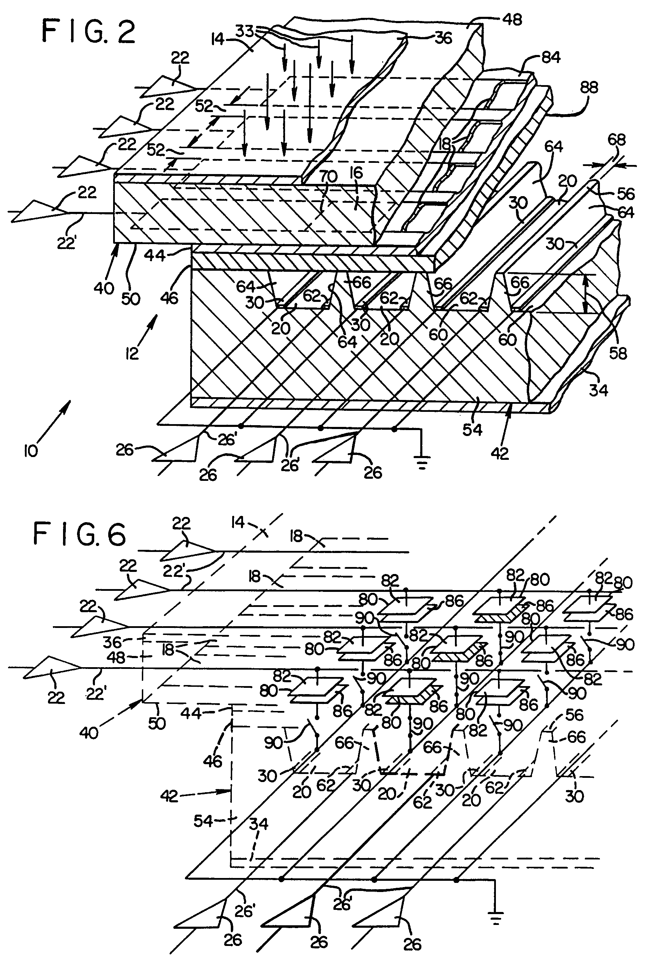

Column electrodes 18 receive data drive signals of the analog voltage type developed on parallel output conductors 22' by different ones of the output amplifiers 22 (Figs. 2-6) of a data driver or drive circuit 24, and channels 20 receive data strobe signals of the voltage pulse type developed on parallel output conductors 26' by different ones of the output amplifiers 26 (Figs. 2-6) of a data strobe or strobe means of strobe circuit 28. Each of the channels 20 includes a reference electrode 30 Fig. 2) to which a reference potential common to each channel 20 and data strobe 28 is applied.

To synthesize an image on the entire area of display surface 24, display system 10 employs a scan control circuit 32 that coordinates the functions of data driver 24 and data strobe 28 so that all columns of display elements 16 of display panel 12 are addressed row by row in row scan fashion. Display panel 12 may employ electro-optic materials of different types. For example, if it uses such a material that changes the polarization state of incident light rays 33, display panel 12 is positioned between a pair of light polarizing filters 34 and 36 (Fig. 2), which cooperate with display panel 12 to change the luminance of light propagating through them. The use of a scattering liquid crystal cell as the electro-optic material would not require the use of polarizing filters 34 and 36, however. A color filter (not shown) may be positioned within display panel 12 to develop multi-colored images of controllable color intensity. For a projection display, color can also be achieved by using three separate monochrome panels 10, each of which controls one primary color red, blue or green.

With reference to Figs. 2-5, display panel 12 comprises an addressing structure that includes a pair of generally parallel electrode structures 40 and 42 spaced apart by a layer 44 of electro-optic material, such as a nematic liquid crystal, and a thin layer 46 of a dielectric material, such as glass, mica, or plastic. Electrode structure 40 comprises a glass dielectric substrate 48 that has deposited on its inner surface 50 column electrodes 18 of indium tin oxide, which is optically transparent, to form a striped pattern. Adjacent pairs of column electrodes 18 are spaced apart a distance 52, which defines the horizontal space between next adjacent display elements 16 in a row.

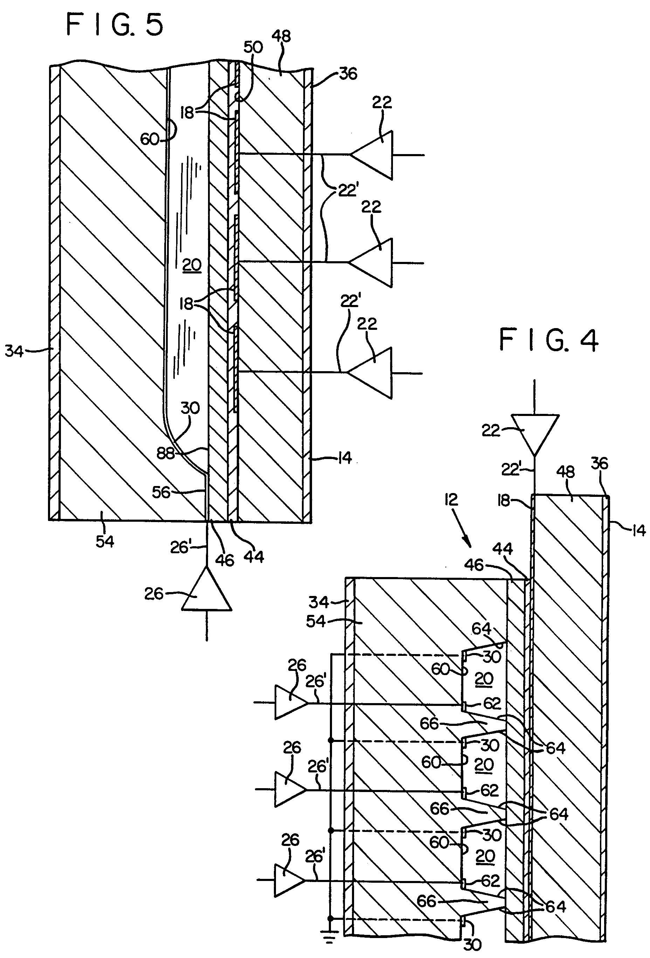

Electrode structure 42 comprises a glass dielectric substrate 54 into whose inner surface 56 multiple channels 20 of rounded trapezoidal cross section are inscribed. Channels 20 have a depth 58 measured from inner surface 56 to a base portion 60. Each one of the channels 20 has a pair of thin, electrodes of various compositions and surface coatings, 30 and 62 extending along base portion 60 and a pair of inner side walls 64 diverging in the direction away from base portion 60 toward inner surface 56. The reference electrodes 30 of the channels 20 are connected to a common electrical reference potential, which can be fixed at ground potential as shown. The electrodes 62 of the channels 20 are connected to different ones of the output amplifiers 26 (of which three and five are shown in Fig. 2 and Fig. 3, respectively) of data strobe 28. (The electrodes 62 are hereinafter referred to as "row electrodes 62.") To ensure proper operation of the addressing structure, the reference electrodes 30 and row electrodes 62 preferably are connected to the electrical reference potentials and the outputs 26' of data strobe 28, respectively, on opposite sides of display panel 10.

The sidewalls 64 between adjacent channels 20 define a plurality of support structures 66 whose top surfaces 56 support layer 46 of dielectric material. Adjacent ones of channels 20 are spaced apart by the width 68 of the top portion of each support structure 66, which width 68 defines the vertical space between next adjacent display elements 16 in a column. The overlapping regions 70 of column electrodes 18 and channels 20 dimensions of display elements 16, which are shown in dashed lines in Figs. 2 and 3. Fig. 3 shows with better clarity the array of display elements 16 and the vertical and horizontal spacings between them.

The magnitude of the voltage applied to column electrodes 18 specifies the distance 52 to promote isolation of adjacent column electrodes 18. Distance 52 is typically much less than the width of column electrodes 18. The inclinations of the side walls 64 between adjacent channels 20 specify the distance 68, which is typically much less than the width of channels 20. The widths of the column electrodes 18 and the channels 20 are typically the same and are a function of the desired image resolution, which is specified by the display application. It is desirable to make distances 52 and 68 as small as possible. In current models of display panel 12, the channel depth 58 is less than or equal to one-half the channel width.

Each of the channels 20 is filled with an ionizable gaseous mixture, preferably one that includes helium and nitrogen or hydrogen, for reasons that will be explained below. Each of the channels 20 are in fluid connection with the gas dispensing ducts 19, which can selectively dispense the hydrogen or nitrogen gas from gas reservoir 21 to channels 20. In the illustrated embodiment, dispensing of the gas is effected by controlled heating the reservoir at appropriate intervals so as to maintain the desired concentration of the nitrogen gas or is maintained automatically by vapor pressure. The operative volumetric proportion of hydrogen or nitrogen gas is between 0.01 percent and 20.0 percent of the gaseous mixture. In an alternative embodiment, dispensation is provided by periodic opening of a control valve (not shown).

Layer 46 of dielectric material functions as an isolating barrier between the ionizable gaseous mixture contained within channel 20 and layer 44 of liquid crystal material. The absence of dielectric layer 46 would, however, permit either the liquid crystal material to flow into the channel 20 or the ionizable gaseous mixture to contaminate the liquid crystal material. Dielectric layer 46 may be eliminated from displays that employ a solid or encapsulated electro-optic material.

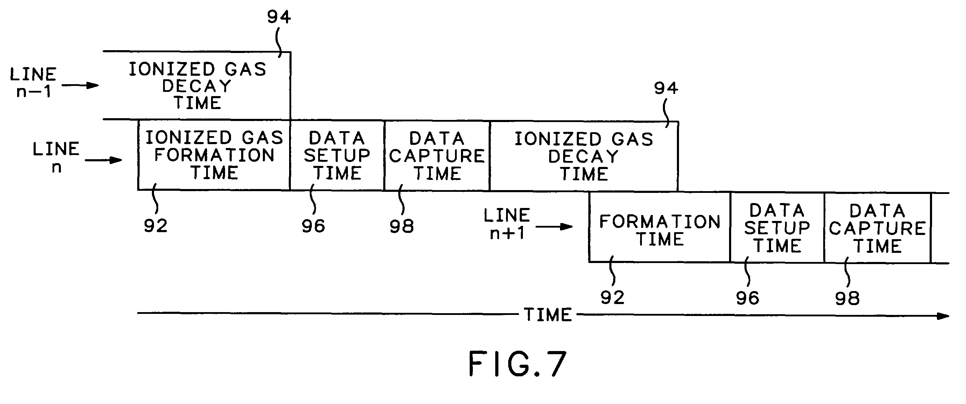

The principles underlying the operation of display panel 12 are that (1) each of its display elements 16 functions as a sampling capacitor for analog voltage data applied to the column electrode 18 forming a part of the display element and (2) the ionizable gas functions as a sampling switch. Fig. 6 is an equivalent circuit to which the following explanation of the operation of display system 10 refers.

With reference to Fig. 6, each of display elements 16 of display panel 12 can be modeled as a capacitor 80 (hereinafter "capacitor model 80"), whose top plate 82 represents one of the column electrodes 18 (Fig. 2) and whose bottom plate 86 represents the free surface 88 (Fig. 2) of layer 46 of the dielectric material. Capacitor model 80 represents the capacitive liquid crystal cell formed by an overlapping region of a column electrode 18 and a channel 20. The description herein of the operation of display system 10 refers to the capacitor model 80.

In accordance with the basic addressing procedure, data driver 24 captures a first line of data, which represents discrete samples of the time-varying voltage of an analog data signal in a time interval of predetermined duration. The sample of the magnitude of the data signal at a particular instance within the time interval represents the magnitude of the analog voltage applied to a capacitor model 80 in a corresponding column position of the row electrode 62 receiving a strobe pulse. Data driver 24 develops on its output conductors 22 the analog voltages that are applied to column electrodes 18. In Fig. 6, four exemplary output amplifiers 22 of data driver 24 deliver analog voltages of positive polarity with respect to reference electrode 30 to the respective ones of column electrodes 18 to which they are connected. The application of a positive voltage on a column electrode 18 induces on free surface 88 (Fig. 2) of layer 46 of the dielectric material a voltage that is essentially equal to the magnitude of the applied voltage. This causes no change in the potential difference across capacitor model 80 and is represented in Fig. 6 by a top plate 82 and a bottom plate 86 with white surfaces.

In this instance, the gaseous mixture contained in channel 20 is in a nonionized state, and the analog voltage developed on plates 82 and 86 of capacitor model 80 is positive with respect to the voltage potential of reference electrode 30 in the channel. Whenever data strobe 28 develops a negative-going voltage pulse on the row electrode 62 positioned within channel 20, the ionizable gaseous mixture in channel 20 assumes an ionized state. The channel 20 whose row electrode receives the strobe pulse is represented in Fig. 6 in dark, thick lines. Under these conditions, the grounded reference electrode 30 and the strobed row electrode 62 function as an anode and a cathode, respectively, for the ionized gas contained within the channel.

The electrons in the ionized gas neutralize the induced positive voltage on the bottom plates 86 of capacitor models 80. The capacitor models 80 in the strobed row are enlarged with the data voltages applied across them. This condition is indicated in Fig. 6 by top plates 82 with white surfaces and bottom plates 86 with lined surfaces. Upon completion of the storage of the data voltages across capacitor models 80, data strobe 28 terminates the negative-going voltage pulse on the row electrode 62 of the strobed channel 20, thereby ending the strobe pulse and extinguishing the ionized gas.

Each of the row electrodes 62 is strobed in a similar manner until the entire display surface 14 is completely addressed and thereby stores an image field of data. The voltage remains stored across each of the capacitor models 80 in the strobed row for a time at least as long as the duration of the image field and is independent of subsequent changes in data voltage applied to top plate 82 of capacitor model 80. The voltage stored across each of the capacitor models 80 changes in accordance with the analog data voltages representing the display data of the next succeeding image field.

In a display system 10 whose image files are in a noninterlaced format, the analog data voltages applied to column electrodes 18 in the next succeeding image field are of opposite polarity. Alternating between positive and negative polarities from one image field to the next image field provides a long term zero net DC voltage component, which is typically required for long term operation of liquid crystal materials. The liquid crystal material produces the gray scale effect in response to the root-mean-square (rms) value of the applied analog voltage data. The display image produced is, therefore, unaffected by alternate changes in polarity of the analog voltage data. In a display system 10 with image fields in an interlaced format, the analog data voltages applied to column 18 electrodes in next succeeding image frames are of opposite polarity to achieve the long term zero net DC voltage component. Each image frame includes two image fields of which each comprises one-half the number of addressable lines.

The description presented above indicates that the ionizable gaseous mixture contained within each of the channels 20 operates as an electrical switch 90 whose contact position changes between binary switching states as a function of the voltage applied by data strobe 28. The switches 90 shown in Fig. 6 in the open position are connected to reference electrodes 30 and are driven by a strobe pulse applied to row electrodes 62. The absence of a strobe pulse allows the ionizable gaseous mixture within the channels 20 to assume a nonionized state and thereby be in a nonconducting state. The switches 90 shown in Fig. 6 in the closed position are connected to a reference electrode 30 and are driven by a strobe pulse that is applied to row electrode 64 and is of a magnitude that causes the ionizable gaseous mixture within channel 20 to be in an ionized state and thereby be in a conducting state. In Fig. 6, the amplifier 26 shown in the middle of the three output amplifiers 26 of data strobe 28 strobes a row of capacitor models 80 to establish and store the display data voltages across them.

To function as a switch, the ionizable gaseous mixture contained within channels 20 beneath electrode structure 40 communicates with layer 46 of the dielectric material to provide an electrically conductive path from layer 46 of the dielectric material to reference electrode 30. The ionized gas in a channel 20 whose row electrode 62 receives a strobe pulse provides a ground path to the capacitor model 80 representing the portion of liquid crystal material positioned adjacent the plasma. This allows the capacitor models 80 to sample the analog data voltages applied to column electrodes 18. Extinguishing the ionized gas acts to remove the conducting path, thereby allowing the data sample to be held across the display element. The electron current in an ionized gas flows from the cathode (row electrode 62) to the anode (reference electrode 30). The voltages remain stored across layer 44 of the liquid crystal material until voltages representing a new line of data in a subsequent image field are developed across the layer 44. The above-described addressing structure and technique provide signals of essentially 100% duty cycle to every one of the display elements 16.

Fig. 7 is a diagram showing the time constraints that limit the number of lines of data of which display system 10 is capable of addressing during an image field. With reference to Fig. 7, an exemplary line "n" of data requires time 92 for the ionized gas to form after the row of electrodes 62 of the strobed channel 20 receives a strobe pulse. The ionized gas formation time 92 may be substantially eliminated as a factor in limiting the number of addressable lines in an image field by initiating the strobe pulse in advance during the preceding line n-1. In the preferred embodiment, the ionized gas formation time 92 for the gaseous mixture according to the present invention is nominally 3.0 microseconds.

The data setup time 96 represents the time during which data driver 24 slews between the data values of two next adjacent lines of data and develops on output amplifiers 22 the analog voltage signals that are applied to column electrodes 18. The data setup time 96 is a function of the electronic circuitry used to implement data driver 24. A data setup time 96 of less than 1.0 microsecond is achievable.

The data capture time 98 depends on the conductivity of the ionizable gaseous mixture contained within the channels 20. This is typically less than 1.0 microsecond.

The ionized gas decay time 94 represents the time during which the ionized gas in channel 20 returns to a nonionized state upon the removal of a strobe pulse from row electrode 62.

The time required to address a line of data equals the sum of the data setup time 96, the data capture time 98, and the ionized gas decay time 94. The number of lines addressable during an image field equals the time duration of the image field divided by the time required to address a line of data. For noninterlaced 60 Hz frame rate applications, the number of lines of data display system 10 would appear to be capable of addressing exceeds 3,000 lines using the above-described simple addressing technique. It will be appreciated that the number of addressable lines of data is not the same as the resolution of display system 10. The resolution is a function of the widths of the channels 20 and the widths of the column electrodes 18.

The use of a priming technique is advantageous to ensure the ability to address a relatively large number of lines in an image frame. Priming entails the introduction of ions to initiate a gas discharge. Priming of display system 10 can be accomplished by passing a current through a priming channel (not shown) which is orthogonally disposed to the channels 20 and in which each of the channels 20 terminates along one of the margins of display panel 12. Priming allows ionized gas formation without an initial statistical delay time that would otherwise unpredictably lengthen the ionized gas formation time.

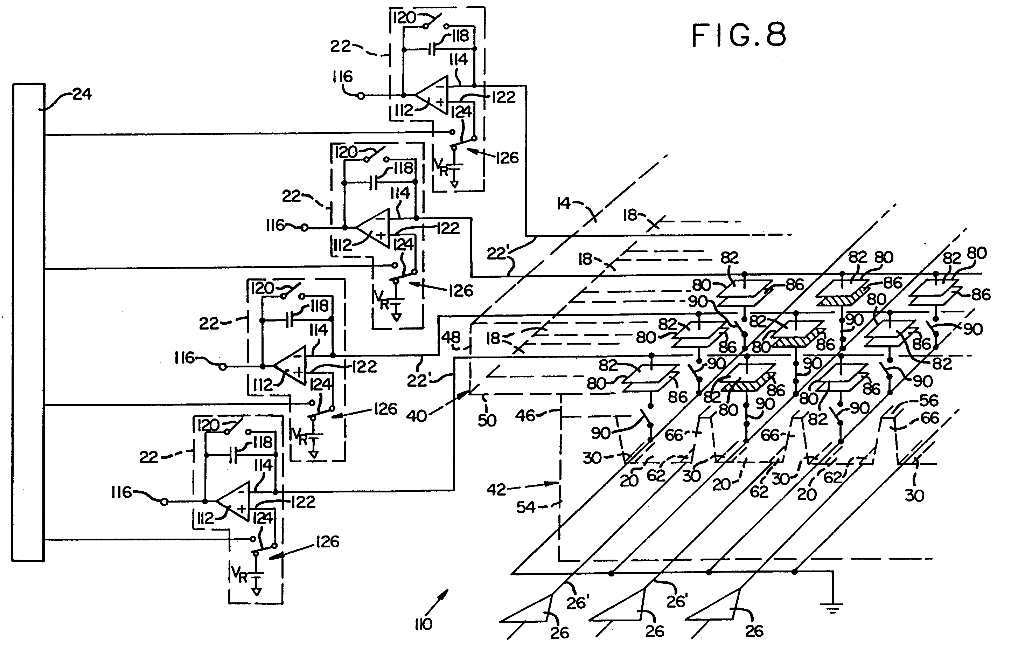

Fig. 8 shows the equivalent circuit for memory system 110. Except as indicated above, the systems of Figs. 6 and 8 are similar, therefore, corresponding components in Figs. 6 and 8 bear identical reference numerals. In memory system 110, dielectric 46 functions as the dielectric element of capacitor model 80, which represents a memory element. It will be appreciated that column electrodes 18 need not be formed of optically transparent material and may advantageously be formed of aluminum or other conductive material. The data drive output amplifiers 22 of memory system 110 comprise circuit elements that function as column electrode drive amplifiers in the data write mode and as column electrode sensing amplifiers in the data read mode. The data strobe output amplifiers 26 of the system of Figs. 6 and 8 are similar.

With reference to Fig. 8, each of the output amplifiers 22 of data drive circuit 24 comprises a high-speed operational amplifier 112 that has connected between its inverting input terminal 114 and output terminal 116 a parallel combination including a feedback capacitor 118 and a switch element 120. Amplifier 112 is selectively configured as a voltage follower in the data write mode by actuating switch element 120 to its conducting state and as an integrator in the data read mode by actuating switch element 120 to its nonconducting state. The noninverting input terminal 122 of operational amplifier 112 is connected to the movable contact terminal 124 of a switch element 126, which selectively connects noninverting input terminal 122 to either a reference voltage V_{R} or an output signal conductor of data drive circuit 24.

Whenever it is in the data write mode, output amplifier 22 delivers a data drive signal to the column electrode 18 forming a memory element of memory system 110. This is accomplished by configuring operational amplifier 112 as a voltage follower and positioning moveable contact terminal 124 of switch element 126 to deliver the data drive signal from data drive circuit 24 to noninverting input terminal 122 of operational amplifier 112. During this time, a row strobe pulse applied to row electrode 62 in the channel 20 forming the memory element 110 excites the ionizable gaseous mixture contained in the channel to the ionized state, thereby developing a data voltage across capacitor model 80 in the manner as described above with reference to Fig. 6. The magnitude of the voltage across capacitor model 80 represents that of the data drive signal.

Whenever it is in the data read mode, data amplifier 22 senses the current in the column electrode 18 forming the memory element of memory system 110. This is accomplished by means of a two-step process.

First, moveable contact terminal 124 of switch element 126 is positioned to deliver voltage reference V_{R} to noninverting input terminal 122 of operational amplifier 112. During this time, the row strobe pulse is inactive to maintain the ionizable gaseous mixture in a nonionized state, thereby allowing the reference voltage V_{R} to be established on output terminal 116 of operational amplifier 112, column electrode 18, and upper plate 82 of capacitor model 80. The voltage across feedback capacitor 118 is thereby normalized to 0.0 volts. It will be appreciated, however, that memory system 110 can be configured to operate with an offset voltage between the inputs and outputs of each operational amplifier 112.

Second, after the voltage across feedback capacitor 118 stabilizes to 0.0 volts, operational amplifier 112 is configured as an integrator whose input terminal 114 is prepared to receive the current flowing from column electrode 18. The voltage difference between lower plate 86 of capacitor model 80 and reference electrode 30 is a function of V_{R} and the previously written data voltage across capacitor model 80. Whenever a row strobe pulse again excites the ionizable gas to its ionized state, lower plate 86 of capacitor model 80 is electrically connected to reference electrode 30, thereby changing the voltage across capacitor model 80. Operational amplifier 112 now configured as an integrator senses this change in voltage and provides on its output terminal 116 a voltage proportional to the data voltage previously developed across capacitor model 80.

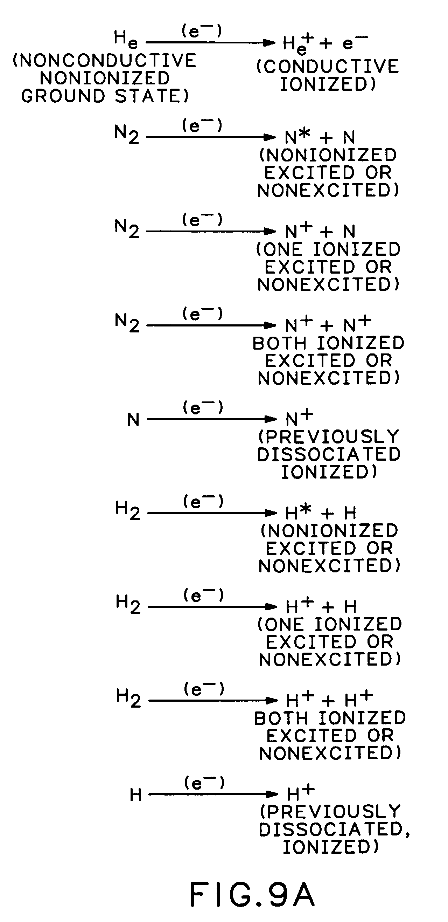

Figs. 9A-9C show exemplary atomic reactions detailing the chemistry for excitation of a preferred ionizable gaseous mixture containing helium and hydrogen or nitrogen from the nonconductive state to the conductive state, and the decay process that returns the ionizable gaseous mixture to the nonconductive state. As stated earlier, the ionizable gaseous mixture switches from the conductive, ionized state to the nonconductive, nonionized state as a result of all of its components' recombining or collisionally decaying to neutral particles. In comparison with prior art pure helium systems, the ionizable gaseous mixture has a decreased decay time that results from the presence in the gaseous mixture of hydrogen or nitrogen gas. The chemical recombination provided by hydrogen or nitrogen gas imparting the reduced decay time is detailed below. The chemical reactions illustrated in Figs. 9A-9C provide an example of the transitions, associations and dissociations which may occur in the ionizable gaseous mixture of the present invention. It is not an exhaustive definition of additional potential reactions, which those skilled in the art may determine.

Fig. 9A shows the chemical reactions triggered when voltage is applied across electrodes 30 and 62 to provide energy in the form of electrons emitted from row electrode 62 to an ionizable gaseous medium in a nonconductive ground state contained within channel 20. The creation of multiple electrons in channel 20 excites a sufficient number of helium and hydrogen or nitrogen particles in the channel to a conductive state and results in the formation of an electrically conductive path, *i.e.*, an electrical switch connection, between reference electrode 30 and row electrodes 62.

As shown in Fig. 9A, the atomic helium particles may react to the energization in alternative ways, including transitioning from their nonionized state to their ionised state. Energization shown here as a reaction with one or more electrons of the hydrogen or nitrogen gas may result in dissociation of the diatomic, molecular to their atomic form. Excitation of the gas particles nay also induce release of one or more electrons from their normal orbital path around the diatomic hydrogen or nitrogen.

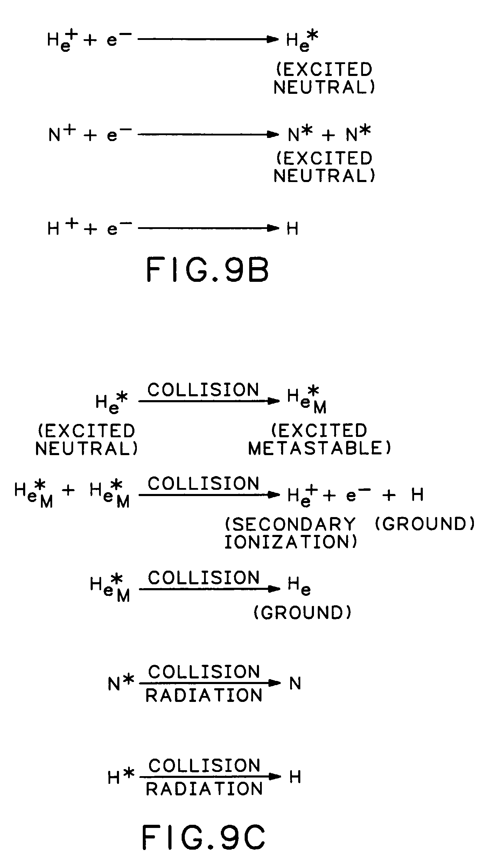

Fig. 9B shows decay of the conductive helium, hydrogen and nitrogen particles through collisions with the channel walls and each other, and recombination of excited particles and free electrons. Following recombination of the ions and electrons, helium, hydrogen and nitrogen particles may decay to an excited neutral state.

Fig. 9C illustrates the collision of helium particles in the excited neutral state to form helium particles in an excited metastable state. Formation of these helium particles in the excited metastable state allows undesirable ion-electron pair formation(s) resulting in secondary ionization and increased decay times.

Fig. 9C also shows the decay of atomic hydrogen or nitrogen in the excited state to atomic hydrogen or nitrogen in the ground state by the release of energy through radiative decay. Radiative decay time of the excited hydrogen or nitrogen is less than a few microseconds.

Upon completion of the reaction shown in Figs. 9A-9C, the system is in its initial state, ready to repeat the process, with helium and hydrogen or nitrogen particles in a nonionized nonconductive state.

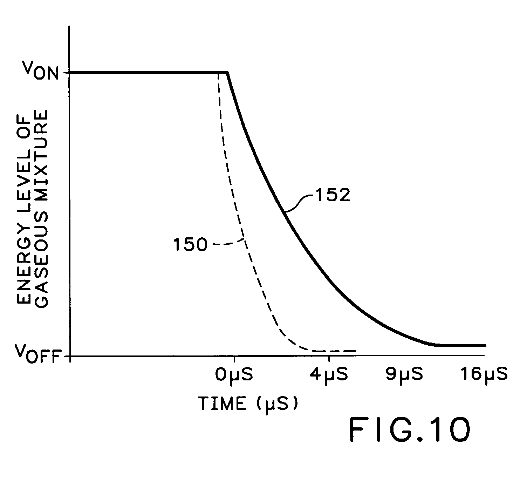

Fig. 10 shows a comparison of the decay time waveform 150 (dashed line) of a gaseous mixture of helium and hydrogen of the present invention with the decay time waveform 152 (solid line) of a pure helium gas. The total decay time 94 of the gaseous mixture is approximately one and four microseconds, substantially less than the approximately 16 microseconds decay time 152 of pure helium prior art systems. Gaseous mixture decay time 94 including helium and hydrogen is, therefore, a shortened decay time in comparison with decay time 152 of pure helium gas. In Fig. 10, Vₒₙ represents the conductive state of the ionizable gaseous mixture of the present invention and of the prior art pure helium system. V_{off} at time=0 represents the voltage at which row electrode 62 no longer effects ionization of the ionizable gaseous mixture contained within channel 20. Total decay time 94 of the ionizable gaseous mixture and total decay time 152 of pure helium gas represent the time periods at which amount of the ionizable gaseous mixture becoming nonconductive and ready for repetition of the ionization process falls below a threshold. Total decay time 94 of the ionizable gaseous mixture and total decay time 150 of the helium and hydrogen gaseous mixture represent the time periods at which amount of the ionizable gaseous mixture becoming nonconductive and ready for repetition of the ionization process falls between one and four microseconds.

It will be obvious to those having ordinary skill in the art that many changes may be made to the details of the above-described preferred embodiments of the present invention without departing from the underlying principles thereof. The scope of the present invention should, therefore, be determined only by the following claims.

## Claims

1. An addressing structure for an analog data storage element, comprising:
a gaseous mixture that includes a gaseous medium containing as the ionizable gaseous medium a gaseous mixture containing first and second ionizable components having particles which are ionizable at a predetermined voltage that does not cause uncontrolled breakdown between the conductors that produce the interruptible electrical connection, the particles of the first ionizable component being characterized by their returning from the ionized state to the nonionized state without undergoing a metastable state of greater duration than a transient metastable state, and the particles of the second ionizable component characterized by undergoing a metastable state when returning from the ionized state to the nonionized state, the particles of the first ionizable component being present in sufficient quantity to reduce the occurrences of secondary ionization-producing collisions between particles of the second ionizable component that are in a metastable state when the gaseous medium returns from the ionized state to the nonionized state, thereby decreasing the time required to return the ionizable gaseous medium from the ionized state to the nonionized state;
an ionizing means to induce the ionizable gaseous medium to assume the ionized state and thereby complete the electrical connection between the data storage element and the electrical reference; and
a means to allow the ionizable gaseous medium to return from the ionized state to the nonionized state.

2. The structure of claim 1, wherein the particles of the first ionizable component are characterized by a threshold ionization potential of no more than abut 30 electron volts.

3. The structure of claim 1, wherein the particles of the first ionizable component comprise a proportion of between about 0.01 percent and about 20.0 percent of the gaseous mixture.

4. The structure of claim 1, wherein the particles of the first ionizable component include a gas taken from the group consisting essentially of hydrogen and nitrogen.

5. The structure of claim 1, wherein the particles of the second ionizable component include a noble gas having an ionization potential of greater than about 4 electron volts.

6. The structure of claim 1, wherein the particles of the second ionizable component is a noble gas taken from the group consisting essentially of helium, neon, xenon, krypton and argon.

7. The structure of claim 1, further comprising a reservoir in communication with the gaseous mixture from which particles of the first ionizable component of the gaseous mixture are dispensable in the gaseous mixture when the reservoir is heated such that particles of the first ionizable component constitute between about 0.01 percent and about 20.0 percent of the gaseous mixture.

8. The structure of claim 1, further comprising a reservoir in communication with the gaseous mixture from which particles of the first ionizable component of the gaseous mixture are dispensable in the gaseous mixture when the reservoir is opened to dispense particles in the gaseous mixture such that the particles of the first ionizable gaseous component are maintained to constitute a proportion of between about 0.01 percent and about 20.0 percent of the gaseous mixture.

9. The structure of claim 1, further comprising a reservoir in communication with the gaseous mixture containing the particles of the first ionizable component, wherein the reservoir is maintained at a vapor pressure having an equilibrium with the gaseous mixture such that the particles of the first ionizable component constitute between about 0.01 percent and about 20.0 percent of the gaseous mixture.

10. The structure of claim 1, wherein the ionizable gaseous medium further comprises a predetermined amount of collisionally matched ionized particles, and wherein the step of causing the ionizing means to allow the ionizable gaseous medium to leave the ionized state further comprises producing atomic particles of the ionizable gaseous medium in an excited state that undergo ion-atomic particle collisions with the collisionally matched ionized particles.

11. The structure of claim 1, wherein the ionizable gaseous medium further comprises a predetermined amount of collisionally matched ionized particles containing carbon, and wherein the step of causing the ionizing means to allow the ionizable gaseous medium to leave the ionized state further comprises producing atomic particles of the ionizable gaseous medium in an excited state that undergo ion-atomic particle collisions with the collisionally matched ionized particles.

12. The structure of claim 1, wherein the ionizable gaseous medium further comprises a predetermined amount of collisionally matched ionized particles which are carbon-containing compounds taken from the group consisting essentially of carbon monoxide, carbon dioxide, carbon tetrafluoride, methane, and carbon vapor vaporized from a carbon-containing surface and wherein the step of causing the ionizing means to allow the ionizable gaseous medium to leave the ionized state further comprises producing atomic particles of the ionizable gaseous medium in an excited state that undergo ion-atomic particle collisions with the collisionally matched ionized particles.
